(19) Europäisches Patentamt
European Patent Office
Office européen des brevets

(11) Veröffentlichungsnummer: **0 101 975 A1**

# (12) EUROPÄISCHE PATENTANMELDUNG

(21) Anmeldenummer: **83107687.2**

(22) Anmeldetag: **04.08.83**

(51) Int. Cl.³: **C 09 B 29/50**
C 09 B 33/13, C 09 B 29/01
//D06P1/04, C09D1/00

(30) Priorität: **12.08.82 DE 3229953**

(43) Veröffentlichungstag der Anmeldung:
**07.03.84 Patentblatt 84/10**

(84) Benannte Vertragsstaaten:
**CH DE FR GB IT LI**

(71) Anmelder: **BASF Aktiengesellschaft**
**Carl-Bosch-Strasse 38**
**D-6700 Ludwigshafen(DE)**

(72) Erfinder: **Dimroth, Peter, Dr.**
**Collinistrasse 5**
**D-6800 Mannheim 1(DE)**

(72) Erfinder: **Kowarsch, Heinrich, Dr.**
**Kuernbacher Strasse 34**
**D-7519 Oberderdingen(DE)**

## (54) Pigmentfarbstoffe der Pyrazolonreihe.

(57) Die Erfindung betrifft Verbindungen, die in einer der möglichen tautomeren Formeln der allgemeinen Formel I

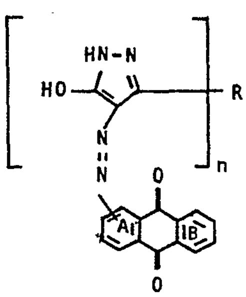

I

entsprechen, in der n = 1 oder 2 und R für n = 1 ein ggf. substituierter Aryl- oder Heteroarylrest oder für n = 2 ein Brückenglied sind und die Ringe A und B noch substituiert sein können.

Die erfindungsgemäßen Verbindungen eignen sich hervorragend als Pigmente zum Färben von Lacken, Druckfarben oder Kunststoffen.

EP 0 101 975 A1

Pigmentfarbstoffe der Pyrazolonreihe

Die Erfindung betrifft Verbindungen, die in einer der möglichen tautomeren Formeln der allgemeinen Formel I

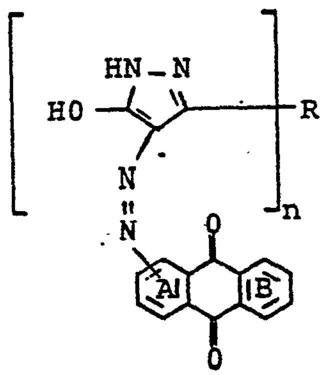

I

entsprechen, in der n = 1 oder 2 und R für n = 1 ein ggf. substituierter Aryl- oder Heteroarylrest oder für n = 2 ein Brückenglied sind und die Ringe A und B noch substituiert sein können.

Als Substituenten für den Ring A kommen beispielsweise Fluor, Chlor, Brom, Nitro, Methyl, Ethyl, Propyl, Methoxy, Ethoxy, Phenoxy, Acetyl, Benzoyl, Hydroxy, Methylamino, Phenylamino, Acetylamino, Propionylamino, gegebenenfalls durch Chlor, Brom, Methyl oder Methoxy substituiertes Benzoylamino, Carboxyl, Methylmercapto oder Phenylmercapto in Betracht.

Substituenten für den Ring B sind z. B. Chlor, Brom, $C_1$-$C_4$-Alkyl, $C_1$-$C_4$-Alkoxy, Nitro, Benzoylamino oder Acetylamino.

Bg/P

Wenn n = 1 ist, sind als Reste R beispielsweise ggf. durch Fluor, Chlor, Brom, $C_1$ - $C_4$-Alkyl, $C_1$ - $C_4$-Alkoxy, Acetylamino, Benzoylamino, Nitro, Acetoacetylamino, Tetrachlorphthalimido oder Homophthalimido substituiertes Phenyl, ggf. durch Chlor, Brom oder Acetyl substituiertes Naphthyl oder ggf. durch Chlor, Brom, Methyl, Ethyl, Nitro, Acetyl oder Benzoyl substituiertes Anthrachinoyl zu nennen.

Brückenglieder R (n = 2) sind beispielsweise ggf. durch Chlor Brom, Methyl, Ethyl, Methoxy oder Ethoxy substituiertes Phenylen oder Naphtylen sowie Reste der Formel:

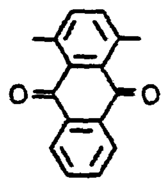

Die Herstellung der Kupplungskomponenten ist im Prinzip z. B. aus: JA-7312461-R; JA-7249167-R; Liebigs Annal. Chem. 352, 158 (1907); CAS-REGNR. 4860-93-9 bekannt, weitere Verbindungen können analog hergestellt werden. Die Verbindungen der Formel I haben im wesentlichen Orange- bis Blauviolettfarbtöne und eignen sich aufgrund ihrer Unlöslichkeit als Pigmente. Sie zeichnen sich durch hervorragende Echtheiten, z. B. Licht-, Wetter-, Überlackier- und Migrationsechtheiten aus und können zum Färben von Lacken, Kunststoffen und Druckfarben verwendet werden.

Von besonderer Bedeutung sind Verbindungen der Formel I, bei denen ein 1-Aminoanthrachinon als Diazokomponente verwendet wurde und ferner n = 1 und R = ggf. substituiertes Phenyl oder Naphtyl sind. Bevorzugte Substituenten für die Reste R sind: Chlor, Brom, Methyl, Ethyl, Methoxy, Ethoxy, Acetyl, Benzoylamino oder Nitro. Weiterhin wertvoll sind Verbindungen mit n = 2 und R = ggf. substituiertem Phenylen.

Bevorzugte Substituenten für den Ring A sind z. B. Chlor, Brom, Benzoylamino, Methyl, Ethyl, Acetyl oder Benzoyl und für den Ring B: Brom, Chlor, Methyl, Ethyl, Acetyl, Benzoyl oder Benzoylamino. Zur Herstellung der Verbindung der Formel I kann man eine Diazoniumverbindung von Aminen der Formel

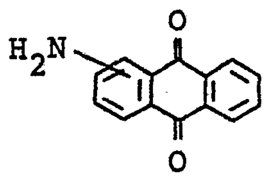

mit Kupplungskomponenten der Formel

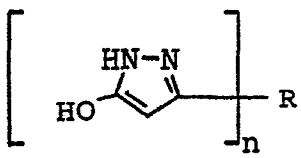

nach üblichen Methoden umsetzen. Einzelheiten der Umsetzungen können den Beispielen entnommen werden, in denen sich Angaben über Teile und Prozente, sofern nicht anders vermerkt, auf das Gewicht beziehen.

Beispiel 1

22,4 Teile 1-Aminoanthrachinon werden in eine Mischung aus 46 Teilen 96 %iger Schwefelsäure und 34 Teilen 40 %iger Nitrosylschwefelsäure so eingetragen, daß die Temperatur 40 °C nicht übersteigt und zwei Stunden bei 40 °C gerührt. Dann wird die Lösung in 300 Teile Eis und Wasser eingerührt, das auskristallisierte Diazoniumsulfat abfiltriert und mit Eiswasser gewaschen.

Das wasserfeuchte Diazoniumhydrogensulfat wird dann zusammen mit 600 Teilen Wasser und 10 Teilen Eisessig verrührt. In diese Lösung läßt man bei + 5 bis + 10 °C eine Mischung aus 16 Teilen Phenylpyrazolon, 600 Teilen Wasser und 16 Teilen 50 %iger Natronlauge einlaufen. Man rührt noch zwei Stunden bei Raumtemperatur nach, filtriert, wäscht mit Wasser und wenig Methanol nach und trocknet. Man erhält 38,5 Teile (= 97 % d. Th.) einer orangefarbenen Verbindung der Formel

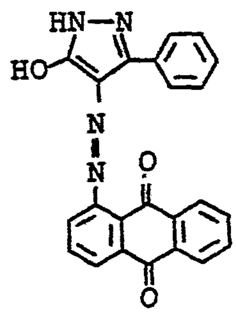

Der Farbstoff läßt sich in dieser Form bereits direkt zum Färben von Druckfarben, Lacken und Kunststoffen einsetzen.

Eine im Deckvermögen und der Wetterechtheit noch verbesserte Pigmentform erhält man, wenn man z. B. 10 Teile Farbstoff in 100 Teilen Dimethylformamid bei 100 °C drei Stunden lang rührt, absaugt, mit Methanol wäscht und trocknet.
Ausbeute: 9,3 Teile.

Die Färbungen zeichnen sich durch reine Farbtöne mit hervorragenden Licht- und Wetterechtheiten aus. Dies gilt auch für die mit den in den folgenden Beispielen beschriebenen Pigmenten hergestellten Färbungen.

| Bsp. | Kupplungskomponente | Diazokomponente | Farbe |
|---|---|---|---|
| 2 | 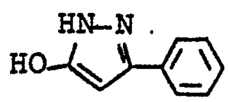 | 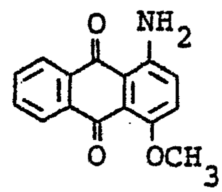 | Rot |
| 3 | " | 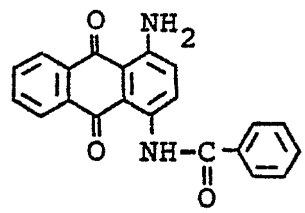 | Marron |
| 4 | " | 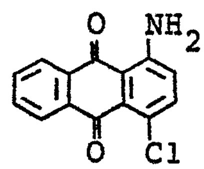 | Orange |
| 5 | " | 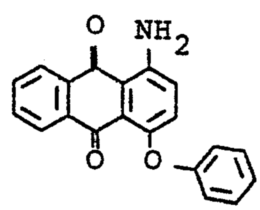 | Violett |
| 6 | " | 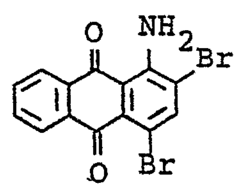 | Orange |
| 7 | " | 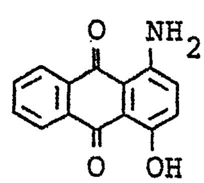 | Violett |
| 8 | " | 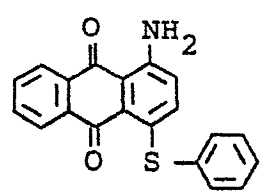 | blaust. Rot |

| Bsp. | Kupplungskomponente | Diazokomponente | Farbe |
|---|---|---|---|
| 9 | " | 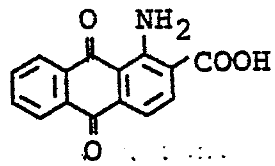 | Braun |
| 10 | " | 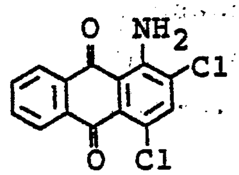 | gelbst. Orange |
| 11 | 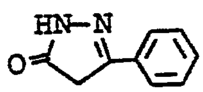 | 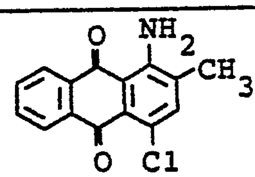 | Orange |
| 12 | " | 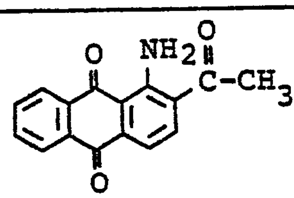 | Orange |
| 13 | " | 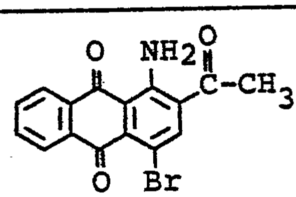 | gelbst. Orange |
| 14 | 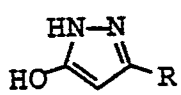 R = 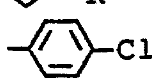 | 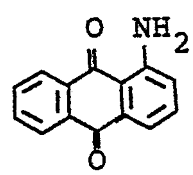 | gelbst. Orange |
| 15 | " R = 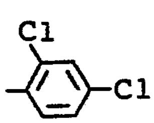 | " | Orange |
| 16 | " R = 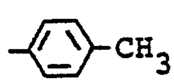 | " | rotst. Orange |

| Bsp. | Kupplungskomponente | Diazokomponente | Farbe |
|---|---|---|---|
| 17 | 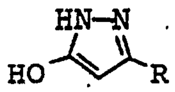 R = 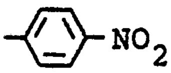 | 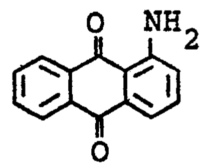 | Orange |
| 18 | " R = 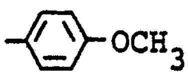 | " | rotst. Orange |
| 19 | " R = 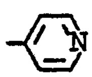 | " | rotst. Gelb |
| 20 | " R = 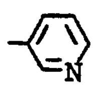 | " | gelbst. Orange |
| 21 | 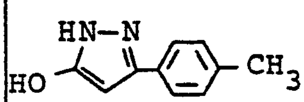 | 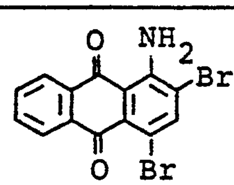 | rotst. Orange |
| 22 | 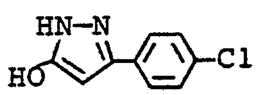 | 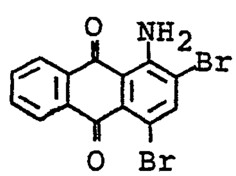 | gelbst. Orange |
| 23 | 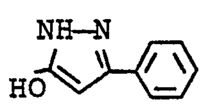 | 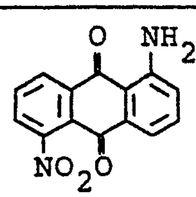 | Orange |
| 24 | " | 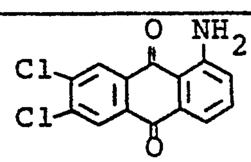 | gelbst. Orange |
| 25 | " | 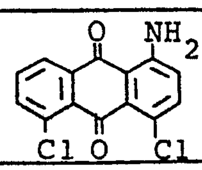 | Orange |

Beispiel 26

Das entsprechend Beispiel 1 aus 25,8 Teilen 1-Amino,4-Chloranthrachinon erhaltene wasserfeuchte Diazoniumhydrogensulfat wird zusammen mit 12,1 Teilen der Kupplungskomponente der Formel

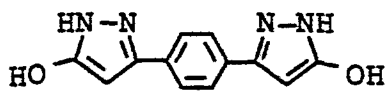

20 Teilen Pyridin und 400 Teilen N-Methylpyrrolidon 12 Stunden bei Raumtemperatur und drei Stunden bei 130 °C gerührt. Nach dem Filtrieren wird mit N-Methylpyrrolidon und Methanol gewaschen und getrocknet. Man erhält 32 Teile (= 82 % d. Th.) eines hervorragend lösungsmittel- und migrationsechten Rotpigmentes der Formel:

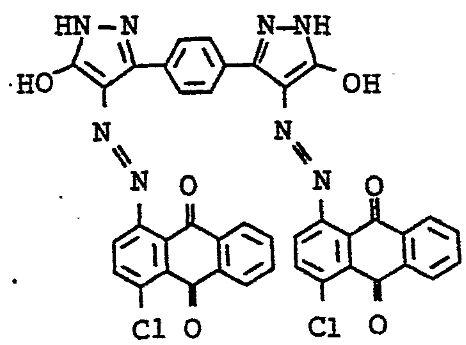

Analog werden auch die in der folgenden Tabelle beschriebenen Pigmente hergestellt:

| Bsp. | Kupplungskomponente | Diazo-komponente | Farbe |
|---|---|---|---|
| 27 | 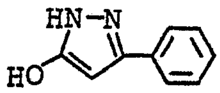 | 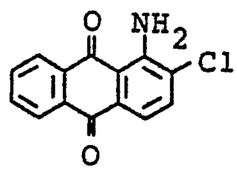 | gelbst. Orange |
| 28 | " | 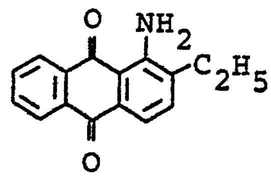 | rotst. Orange |
| 29 | " | 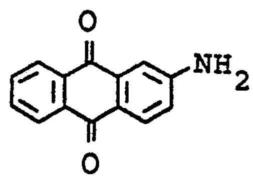 | Orange |
| 30 | " | 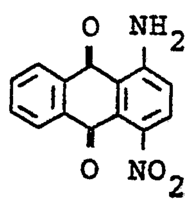 | Marron |
| 31 | " | 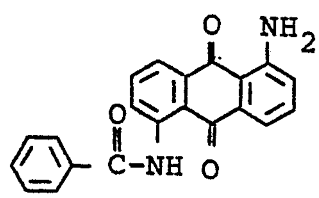 | rotst. Orange |
| 32 | " | 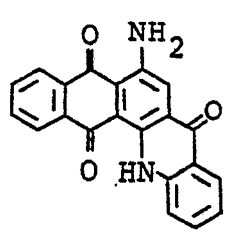 | Violett |

| Bsp. | Kupplungskomponente | Diazo-komponente | Farbe |
|---|---|---|---|
| 33 | 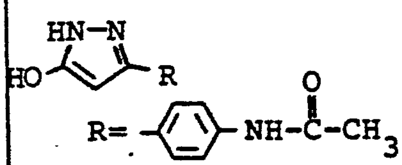 | 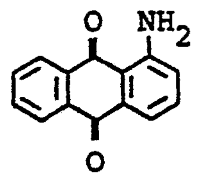 | rotst. Orange |
| 34 | " 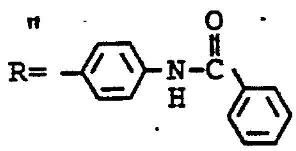 | 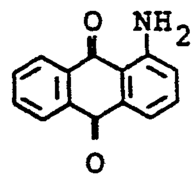 | Orange |
| 35 | " 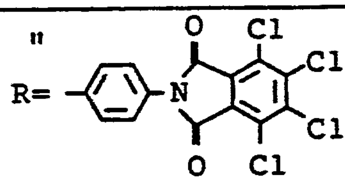 | 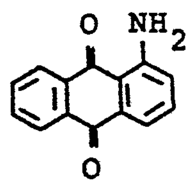 | Rot |
| 36 | 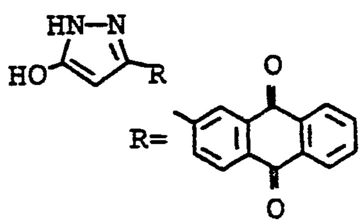 | 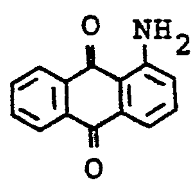 | Orange |
| 37 | " 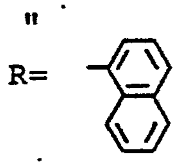 | " | Orange |
| 38 | " 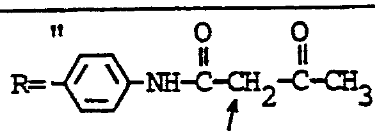 | 2 " | rotst. Gelb |
| 39 | 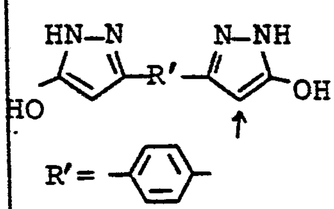 | 2 " | Rot |
| 40 | " 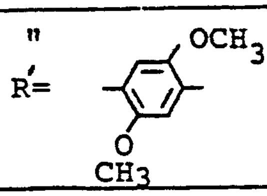 | 2 " | Braun |

| Bsp. | Kupplungskomponente | Diazokomponente | Farbe |
|---|---|---|---|
| 41 | R'= 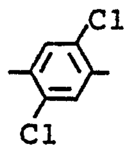 | 2 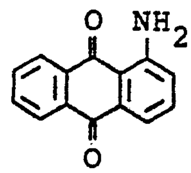 | rotst. Orange |
| 42 | R'= 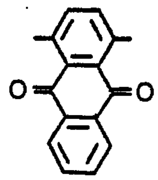 | 2 " | Rot |
| 43 | 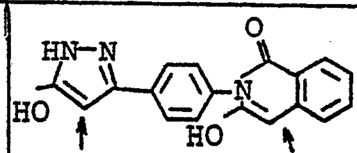 | 2 " | rotst. Gelb |
| 44 | 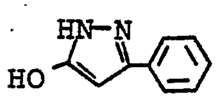 | 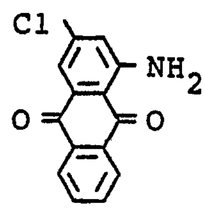 | Orange |
| 45 | R = 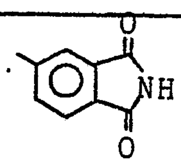 | 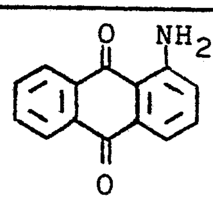 | Orange |
| 46 | R = 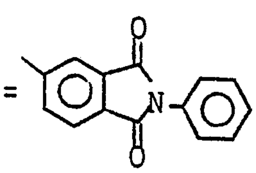 | " | rotst. Orange |
| 47 | R = 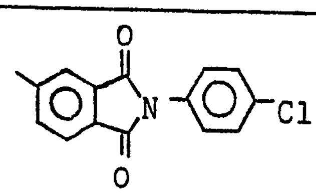 | " | Orange |

| Bsp. | Kupplungskomponente | Diazokomponente | Farbe |
|---|---|---|---|
| 48 | R = 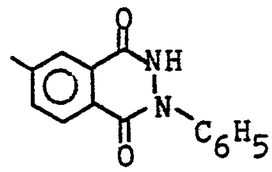 | 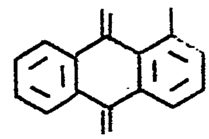 | gelbst. Rot |
| 49 | R = 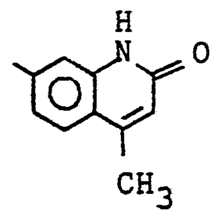 | " | gelbst. Rot |

Beispiel 50

(Anwendung)

a) Lack

10 Teile des nach Beispiel 1 erhaltenen Farbstoffes und 95 Teile Einbrennlackmischung, die 70 % Kokosalkydharz (60 %ig in Xylol gelöst) und 30 % Melaminharz (ungefähr 55 %ig gelöst in Butanol/Xylol) enthält, werden in einem Attritor angerieben. Nach dem Auftragen und einer Einbrennzeit von 30 Minuten bei 120 °C werden orangefarbene Volltonlackierungen mit guter Licht- und Überspritzechtheit erhalten. Durch Zumischen von Titandioxyd werden gelbe Weißaufhellungen erhalten.

Verwendet man die in den Beispielen 2 bis 44 beschriebenen Farbstoffe, so werden Lackierungen in ähnlichen orangen Farbtönen mit ähnlichen Eigenschaften erhalten.

b) Kunststoff

0,5 Teile des nach Beispiel 39 erhaltenen Farbstoffs werden auf 100 Teile Polystyrolgranulat (Standard-Marke) aufgetrommelt. Das angefärbte Granulat wird durch Extrudieren homogenisiert (190 bis 195 °C). Man erhält orange Extrudate, deren Färbung gute Lichtechtheit aufweist.

Verwendet man Mischungen aus 0,5 Teilen Farbstoff und 1 Teil Titandioxyd, so erhält man deckende, orange Färbungen.

Verwendet man die Pigmentfarbstoffe, die nach den Beispielen 35 - 44 erhalten werden, so erhält man analoge Färbungen.

c) Druckfarbe

8 Teile des nach Beispiel 1 erhaltenen Pigmentfarbstoffes 40 Teile eines mit Phenol/Formaldehyd modifizierten Kolophoniumharzes und 55 bis 65 Teile Toluol werden in einem Dispergieraggregat innig vermischt. Man erhält eine orange Toluol-Tiefdruckfarbe. Die mit dieser Farbe erhaltenen Drucke weisen gute Lichtechtheit auf.

Bei Verwendung der Farbstoffe aus den Beispielen 2 bis 44 werden ähnliche Ergebnisse erhalten.

## Patentansprüche

1. Pigmentfarbstoffe der Pyrazolonreihe, die in einer der möglichen tautomeren Formeln der allgemeinen Formel I

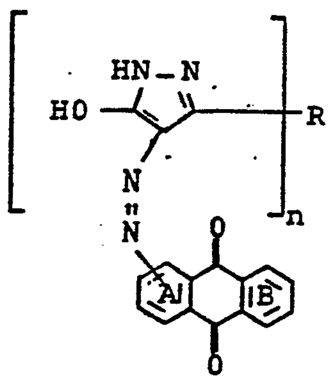

I

entsprechen, in der n = 1 oder 2 und R für n = 1 ein ggf. substituierter Aryl- oder Heteroarylrest oder für n = 2 ein Brückenglied sind und die Ringe A und B noch substituiert sein können.

2. Verbindungen gemäß Anspruch 1, bei denen die Diazokomponente von einem 1-Aminoanthrachinon stammt.

3. Verbindungen gemäß Anspruch 1, bei denen n = 1 ist.

4. Verbindungen gemäß Anspruch 1, bei denen R gegebenenfalls substituiertes Phenyl oder Naphthyl ist.

5. Verwendung der Verbindungen gemäß Anspruch 1 als Pigmente in Lacken, Druckfarben oder Kunststoffen.

0101975

Europäisches Patentamt

# EUROPÄISCHER RECHERCHENBERICHT

Nummer der Anmeldung

EP 83 10 7687

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | DE-A-1 919 081 (CIBA)<br>* Seiten 1,2 *<br>--- | 1,5 | C 09 B 29/50<br>C 09 B 33/13<br>C 09 B 29/01 //<br>D 06 P 1/04<br>C 09 D 1/00 |
| Y | GB-A- 925 859 (CASSELLA)<br>* Seiten 2,3, Tabellen * | 1,5 | |
| A | | 2 | |
| | --- | | |
| D,Y | JP-A-47 049 167 (SUMITOMO)<br>* Insgesamt *<br>--- | 1,5 | |
| A | US-A-2 112 276 (ELLIS, KIRK)<br>* Seite 2, Beispiel 8 *<br>----- | 1,2,5 | |
| | | | **RECHERCHIERTE SACHGEBIETE (Int. Cl. 3)** |
| | | | C 09 B 29/00<br>C 09 B 33/00 |

Der vorliegende Recherchenbericht wurde für alle Patentansprüche erstellt.

| Recherchenort | Abschlußdatum der Recherche | Prüfer |
|---|---|---|
| DEN HAAG | 09-11-1983 | GREEN C.H. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82